# EUROPEAN PATENT APPLICATION

(11) **EP 4 525 546 A1**
(43) Date of publication of application: **19.03.2025**
(21) Application number: 24189398.1
(22) Date of filing: 18.07.2024
(51) Int. Cl.: H04W 74/0808, H04W 74/00

(54) **TRIGGERED CONTENTION-BASED PERIOD**

(30) Priority: 12.09.2023 US 202318465485
(71) Applicant: INTEL Corporation, Santa Clara, CA 95054 (US)
(72) Inventor: KENNEY, Thomas J., Portland, 97229 (US); CARIOU, Laurent, 29290 Milizac (FR)
(74) Representative: Viering, Jentschura & Partner mbB Patent- und Rechtsanwälte

(57) **Abstract**

For example, an Access Point (AP) may be configured to configure a trigger frame to indicate an allocation of a triggered contention-based period to be allocated within a Transmit Opportunity (TxOP) of the AP. For example, the trigger frame may be configured to indicate that only one or more eligible non-AP stations (STAs), which are eligible to communicate during the triggered contention-based period, are to be allowed to contend a wireless medium during the triggered contention-based period. For example, the AP may be configured to transmit the trigger frame to initiate the allocation of the triggered contention-based period. For example, a non-AP STA may be configured to be allowed to contend the wireless medium for a transmission during the triggered contention-based period, for example, based on a determination that the non-AP STA is to be defined as an eligible non-AP STA for the triggered contention-based period.

## Description

### BACKGROUND

Devices in a wireless communication system may be configured to contend a wireless medium to obtain a Transmit Opportunity (TxOP) for transmission of data.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with
Fig. 2 is a schematic flow-chart illustration of a method of a triggered contention-based period, in accordance with some demonstrative aspects.
Fig. 3 is a schematic flow-chart illustration of a method of a triggered contention-based period, in accordance with some demonstrative aspects.
Fig. 4 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (IEEE 802.11-2020, IEEE Standard for Information Technology-Telecommunications and Information Exchange between Systems Local and Metropolitan Area Networks Specific Requirements; Part 11: Wireless LAN Medium Access Control (MAC) and Physical Layer (PHY) Specifications, December, 2020*);* IEEE 802.11ax (IEEE 802.11ax-2021, IEEE Standard for Information Technology-Telecommunications and Information Exchange between Systems Local and Metropolitan Area Networks Specific Requirements; Part 11: Wireless LAN Medium Access Control (MAC) and Physical Layer (PHY) Specifications; Amendment 1: Enhancements for High-Efficiency WLAN, February 2021*);* and/or IEEE 802.11be *(*IEEE P802.11be/D4.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), July 2023)), and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth□, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S 1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

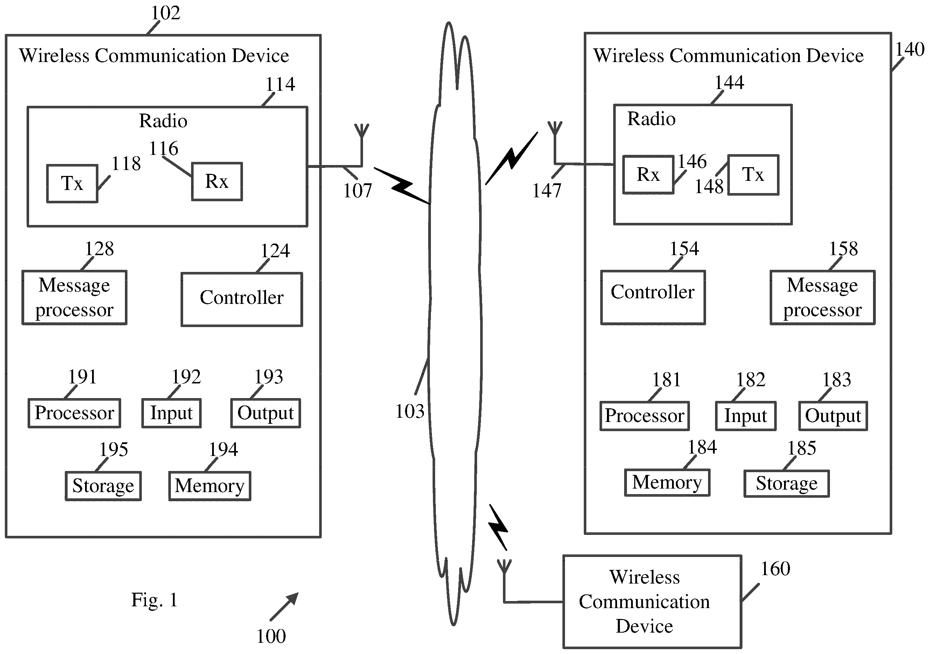

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5Gband, an S 1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications*, e.g., an *IEEE 802.11-2020 Specification, an IEEE 802.11ax Specification, an IEEE 802.11be Specification,* and/or any other specification and/or protocol.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may include, operate as, perform a role of, and/or perform the functionality of, one or more AP STAs and/or one or more non-AP STAs. In one example, device 102 may include, operate as, perform a role of, and/or perform the functionality of, at least one AP STA, and/or device 140 may include, operate as, perform a role of, and/or perform the functionality of, at least one non-AP STA.

In some demonstrative aspects, device 102 may include, operate as, perform a role of, and/or perform the functionality of, a first STA, e.g., an AP STA or a non-AP STA.

In some demonstrative aspects, device 140 may include, operate as, perform a role of, and/or perform the functionality of, a second STA, e.g., an AP STA or a non-AP STA.

In some demonstrative aspects, device 160 may include, operate as, perform a role of, and/or perform the functionality of, a third STA, e.g., an AP STA or a non-AP STA.

In other aspects, device 102, device 140, and/or device 160 may include, operate as, perform a role of, and/or perform the functionality of any other additional or alternative type of STA.

In some demonstrative aspects, device 102, device 140, and/or device 160 may be configured to implement one or more operations and/or functionalities of a channel (medium) access mechanism to access a wireless communication channel, e.g., wireless medium 103, to transmit one or more transmissions, e.g., as described below.

In some demonstrative aspects, the channel access mechanism may implement a contention mechanism to contend wireless medium 103 in order to transmit one or more transmissions, e.g., as described below.

In some demonstrative aspects, the channel access mechanism may include, or may be based on, one or more operations of a collision avoidance with exponential backoff mechanism.

In some demonstrative aspects, the channel access mechanism may include, or may be based on, one or more operations of an Enhanced Distributed Channel Access (EDCA) mechanism, e.g., as described below.

In other aspects, any other additional or alternative channel access mechanism may be implemented.

For example, an EDCA mechanism may be implemented to provide one or more technical advantages and/or benefits, for example, to provide, e.g., always provide, access to all devices, e.g., while minimizing collisions.

However, in some use cases, and/or scenarios, the EDCA mechanism may suffer from a relatively high maximal latency bound.

For example, the relatively high maximal latency bound may not be tolerable by some applications, e.g., latency-sensitive applications.

For example, the EDCA mechanism may be based on an exponential backoff, which may increase a backoff time/range for a STA contending a transmission.

For example, the exponential backoff may increase the backoff time/range for the STA, e.g., by a factor of up to 2, for example, every time there is a collision, e.g., when two or more STAs end their backoff at the same time and, as a result, their attempted collide. For example, the exponential backoff may be configured to reduce the chances that these two or more competing STAs will collide again during their next attempt to access the network.

In one example, a STA may select a first backoff, which may result in a collision of a transmission attempt, e.g., with a transmission attempt of another STA. In addition to the STA being "unlucky" in the collision, and therefore not able to transmit its payload, the STA will also be "punished" by being forced to draw a new backoff time, which may statistically be longer than the first backoff. This second, probably longer, backoff may cause an even longer wait time before the STA being able to attempt another access of the medium. This may result in an additional "penalty" to STA's that comply with the exponential backoff mechanism.

For example, a collision avoidance with exponential backoff mechanism may work relatively well, e.g., on average. However, in some circumstances, the EDCA mechanism may lead to a very long latency tail, e.g., with catastrophic latency events, for example, due to failed retransmissions and increasing, e.g., doubling, backoff times.

For example, the increasing backoff times according to the exponential backoff concept may be contrary to operations, which are directed to achieve bound latency.

For example, even if a STA is "unlucky" and experiences a collision, the STA should not be deprioritized for channel access, e.g., because the STA is actually getting closer to the latency bound limit.

In some demonstrative aspects, an EDCA Quality of Service (QoS) mechanism may be implemented, for example, to reduce the level of increasing the exponential backoff for some QoS categories, e.g., for high access categories.

For example, an EDCA QoS mechanism may define that some types of traffic (prioritized traffic), e.g., traffic having a relatively high QoS, for example, traffic belonging to a prioritized Access Category (AC), may be provided with more priority for channel access.

For example, an EDCA QoS mechanism may define a cap to be applied to the in exponential backoff.

For example, as a result, only some types of traffic may suffer from the exponential backoff, e.g., only best effort traffic.

For example, an EDCA QoS mechanism may define that the backoff for traffic belonging to some access categories may be increased less than the backoff for traffic belonging to other access categories. In one example, the EDCA QoS mechanism may define that the backoff for traffic belonging to high access categories may be increased, e.g., doubled, only once.

For example, although the EDCA QoS mechanism may provide technical advantages for many use cases, there may be a need to address some technical issues when implementing the EDCA QoS mechanism.

For example, an EDCA QoS mechanism may be defined, based on an assumption that a good classification of traffic and proper use of Traffic Identifiers TIDs and/or ACs are implemented. However, this may not often be the case.

For example, even in case of implementing the EDCA QoS mechanism, STAs may still be more or less penalized when failing or colliding a transmission attempt.

For example, when implementing an EDCA QoS mechanism, the may be some limitations on the number of STAs that can efficiently use a high AC, e.g., a Voice AC (AC_VO), e.g., without leading to a high number of collisions.

For example, as a backoff may be drawn to 0, there may be a possibility for back-to-back channel access, which may be too big of a priority.

For example, even in case a highest AC is used, there may still be a possibility that channel access will be lost.

In some demonstrative aspects, device 102, device 140, and/or device 160 may be configured to implement one or more operations and/or functionalities of a channel (medium) access mechanism, which may be configured to provide a technical solution to cut and/or reduce transmission latency, for example, worst-case latency, e.g., as described below.

In some demonstrative aspects, device 102, device 140, and/or device 160 may be configured to implement one or more operations and/or functionalities of a channel (medium) access mechanism, which may be configured to provide a technical solution to support improved performance for one or more types of traffic, e.g., as described below.

In some demonstrative aspects, device 102, device 140, and/or device 160 may be configured to implement one or more operations and/or functionalities of a channel (medium) access mechanism, which may be configured to provide a technical solution to support improved performance for latency-sensitive traffic, e.g., as described below.

In some demonstrative aspects, device 102, device 140, and/or device 160 may be configured to implement one or more operations and/or functionalities of a channel (medium) access mechanism, which may be configured to provide a technical solution to support improved performance for high-urgency traffic, e.g., as described below.

In some demonstrative aspects, device 102, device 140, and/or device 160 may be configured to implement one or more operations and/or functionalities of a channel (medium) access mechanism, which may be configured to provide a technical solution to support improved performance for high QoS traffic, and/or high AC traffic, e.g., as described below.

In other aspects, the channel (medium) access mechanism may be configured to provide a technical solution to support improved performance for any other suitable type of traffic.

In some demonstrative aspects, device 102, device 140, and/or device 160 may be configured to implement one or more operations and/or functionalities of a channel (medium) access mechanism, which may be configured to provide a technical solution to support an improvement to the EDCA mechanism, e.g., as described below.

In some demonstrative aspects, the channel (medium) access mechanism may be configured to provide a technical solution to cut and/or reduce a latency probability tail, e.g., as described below.

In some demonstrative aspects, the channel (medium) access mechanism may be configured to provide a technical solution to cut and/or reduce the latency probability tail, for example, in one or more use cases and/or scenarios, for example, scenarios with STAs mainly using, or only using, a same type of traffic, e.g., Best Effort (BE) traffic, e.g., as described below.

In some demonstrative aspects, the channel (medium) access mechanism may be configured to provide a technical solution to cut and/or reduce the latency probability tail, for example, in scenarios where STAs are using QoS differentiation and access categories, for example, using the help of an AP, e.g., as described below.

In other aspects, the channel (medium) access mechanism may be configured to provide a technical solution to cut and/or reduce the latency probability tail in any other additional or alternative, use cases, implementations and/or scenarios.

In some demonstrative aspects, device 102, device 140, and/or device 160 may be configured to implement one or more operations and/or functionalities of a channel (medium) access mechanism, which may be configured to define that an AP which has gained a Transmit Opportunity (TxOP) and/or controls a TxOP, may send a trigger frame, e.g., a specific trigger frame, which may be configured to define a time allocation within that TxOP, e.g., as described below.

In some demonstrative aspects, the channel (medium) access mechanism may be configured to define that during the time allocation one or more eligible STAs, e.g., only eligible STAs, may be allowed to contend for the medium, and to utilize at least part of this allocated time for their data transmissions, e.g., as described below.

In some demonstrative aspects, the channel (medium) access mechanism may be configured to define that the eligible STAs may be allowed to contend for the medium during the time allocation, for example, according to one or more channel access rules, e.g., specific channel access rules, as described below.

In some demonstrative aspects, the channel (medium) access mechanism may be configured as a triggered channel access mechanism (also referred to as "triggered-EDCA mechanism"), which may be configured according to an EDCA mechanism, e.g., as described below.

In some demonstrative aspects, controller 124 may be configured to control, trigger, cause, and/or instruct an AP implemented by device 102 to configure a trigger frame to indicate an allocation of a triggered contention-based period to be allocated within a Transmit Opportunity (TxOP) of the AP, e.g., as described below.

In some demonstrative aspects, the trigger frame may be configured to indicate that only one or more eligible non-AP stations (STAs), which are eligible to communicate during the triggered contention-based period, are to be allowed to contend a wireless medium during the triggered contention-based period, e.g., as described below.

In some demonstrative aspects, controller 124 may be configured to control, trigger, cause, and/or instruct the AP implemented by device 102 to transmit the trigger frame to initiate the allocation of the triggered contention-based period, e.g., as described below.

In some demonstrative aspects, the trigger frame may include a duration information to indicate a duration of the triggered contention-based period, e.g., as described below.

In some demonstrative aspects, the triggered contention-based period may be configured according to an EDCA contention mechanism, e.g., as described below.

In other aspects, the triggered contention-based period may be configured according to any other additional or alternative type of contention mechanism.

In some demonstrative aspects, the one or more eligible non-AP STAs may be defined to include a non-AP STA having a predefined type of traffic to be transmitted during the triggered contention-based period, e.g., as described below.

In some demonstrative aspects, the one or more eligible non-AP STAs may be defined to include a non-AP STA having latency-sensitive traffic to be transmitted during the triggered contention-based period, e.g., as described below.

In some demonstrative aspects, the one or more eligible non-AP STAs may be defined to include a non-AP STA having urgent traffic to be transmitted during the triggered contention-based period, e.g., as described below.

In some demonstrative aspects, the one or more eligible non-AP STAs may be defined to include a non-AP STA having high-priority traffic to be transmitted during the triggered contention-based period, e.g., as described below.

In some demonstrative aspects, the one or more eligible non-AP STAs may be defined to include a non-AP STA having traffic of a predefined AC to be transmitted during the triggered contention-based period, e.g., as described below.

In some demonstrative aspects, the one or more eligible non-AP STAs may be defined to include a non-AP STA having a count of unsuccessful retransmissions greater than a retransmission threshold, e.g., as described below.

In some demonstrative aspects, the one or more eligible non-AP STAs may be defined to include a non-AP STA meeting a predefined criterion, e.g., as described below.

In other aspects, the one or more eligible non-AP STAs may be defined according to any other additional or alternative suitable parameters and/or criteria.

In some demonstrative aspects, the trigger frame may be configured to initiate the triggered contention-based period a Short Inter-Frame Space (SIFS) after the trigger frame, e.g., as described below.

In other aspects, the trigger frame may be configured to initiate the triggered contention-based period any other time duration after the trigger frame.

In some demonstrative aspects, controller 124 may be configured to control, trigger, cause, and/or instruct the AP implemented by device 102 to transmit eligibility information to indicate a definition of the one or more eligible non-AP STAs for the triggered contention-based period, e.g., as described below.

In some demonstrative aspects, the eligibility information may include, for example, eligibility condition information to indicate one or more eligibility conditions to determine whether or not a non-AP STA is to be defined as an eligible non-AP STA for the triggered contention-based period, e.g., as described below.

In some demonstrative aspects, the one or more eligibility conditions may include, for example, a latency-based condition to determine whether or not the non-AP STA is to be defined as the eligible non-AP STA for the triggered contention-based period, for example, based on a latency requirement of traffic to be communicated by the non-AP STA, e.g., as described below.

In some demonstrative aspects, the one or more eligibility conditions may include, for example, a retransmission-based condition to determine whether or not the non-AP STA is to be defined as the eligible non-AP STA for the triggered contention-based period, for example, based on a count of unsuccessful retransmissions performed by the non-AP STA, e.g., as described below.

In some demonstrative aspects, the eligibility information is configured, for example, to allow a non-associated STA, which is not associated with the AP, to be defined as an eligible non-AP STA for the triggered contention-based period, e.g., as described below.

In some demonstrative aspects, the eligibility information may include, for example, STA-identification information configured to identify the one or more eligible non-AP STAs, e.g., as described below.

In other aspects, the eligibility information may include any other additional or alternative information to identify, define, and/or indicate the one or more eligible non-AP STAs for the triggered contention-based period.

In some demonstrative aspects, controller 124 may be configured to control, trigger, cause, and/or instruct the AP implemented by device 102 to configure the trigger frame to include at least part of the eligibility information, e.g., as described below.

In some demonstrative aspects, controller 124 may be configured to control, trigger, cause, and/or instruct the AP implemented by device 102 to transmit at least part of the eligibility information prior to the trigger frame, e.g., as described below.

In some demonstrative aspects, controller 124 may be configured to control, trigger, cause, and/or instruct the AP implemented by device 102 to transmit at least part of the eligibility information in a beacon frame prior to the trigger frame, e.g., as described below.

In other aspects, controller 124 may be configured to control, trigger, cause, and/or instruct the AP implemented by device 102 to transmit at least part of the eligibility information in any other additional or alternative type of frame prior to the trigger frame.

In some demonstrative aspects, the beacon frame may include timing information to indicate a transmission time of the trigger frame, e.g., as described below.

In some demonstrative aspects, the timing information may be configured, for example, to indicate a periodicity of a plurality of transmissions of the trigger frame, e.g., as described below.

In some demonstrative aspects, the eligibility information may be configured, for example, to define a plurality of different eligibility modes, e.g., as described below.

In some demonstrative aspects, plurality of different eligibility modes may include, for example, at least a first eligibility mode and a second eligibility mode, e.g., as described below.

In some demonstrative aspects, the first eligibility mode may be configured to define first eligible non-AP STAs, for example, according to a first eligibility condition, e.g., as described below.

In some demonstrative aspects, the second eligibility mode may be configured to define second eligible non-AP STAs, for example, according to a second eligibility condition, e.g., different from the first eligibility condition, e.g., as described below.

In some demonstrative aspects, controller 124 may be configured to control, trigger, cause, and/or instruct the AP implemented by device 102 to transmit contention-mechanism information, which may be configured, for example, to define one or more parameters of a contention mechanism to be applied to the triggered contention-based period, e.g., as described below.

In some demonstrative aspects, the contention-mechanism information may include an EDCA parameter set for the triggered contention-based period, e.g., as described below.

In other aspects, the contention-mechanism information may include any other additional or alternative information to define one or more parameters for the triggered contention-based period.

In some demonstrative aspects, controller 124 may be configured to control, trigger, cause, and/or instruct the AP implemented by device 102 to configure the trigger frame to include at least part of the contention-mechanism information, e.g., as described below.

In some demonstrative aspects, controller 124 may be configured to control, trigger, cause, and/or instruct the AP implemented by device 102 to transmit at least part of the contention-mechanism information prior to the trigger frame, e.g., as described below.

In some demonstrative aspects, controller 124 may be configured to control, trigger, cause, and/or instruct the AP implemented by device 102 to transmit at least part of the contention-mechanism information in a beacon frame prior to the trigger frame, e.g., as described below.

In other aspects, controller 124 may be configured to control, trigger, cause, and/or instruct the AP implemented by device 102 to transmit at least part of the contention-mechanism information in any other additional or alternative type of frame prior to the trigger frame.

In some demonstrative aspects, controller 124 may be configured to control, trigger, cause, and/or instruct the AP implemented by device 102 to set mode information in the trigger frame, for example, to indicate a mode of the triggered contention-based period, e.g., as described below.

In some demonstrative aspects, the mode of the triggered contention-based period may be configured to define, for example, a type of transmissions to be allowed during the triggered contention-based period, e.g., as described below.

In some demonstrative aspects, controller 124 may be configured to control, trigger, cause, and/or instruct the AP implemented by device 102 to set the mode information to a predefined mode value from a plurality of predefined mode values, e.g., as described below.

In some demonstrative aspects, the plurality of predefined mode values may be configured to indicate a respective plurality of triggered contention-based period modes, e.g., as described below.

In some demonstrative aspects, the plurality of predefined mode values may include, for example, an Uplink (UL) mode value to indicate an UL triggered contention-based period, during which, for example, the eligible non-AP STAs may be allowed to transmit only UL Physical layer (PHY) Protocol Data Units (PPDUs) to the AP, e.g., as described below.

In some demonstrative aspects, the plurality of predefined mode values may include, for example, a mixed mode value to indicate a mixed triggered contention-based period, during which, for example, the eligible non-AP STAs may be allowed to transmit UL Physical layer (PHY) Protocol Data Units (PPDUs) to the AP, and/or peer-to-peer (P2P) PPDUs from a non-AP STA to a peer STA, e.g., as described below.

In other aspects, any other additional or alternative triggered contention-based period modes may be implemented.

In some demonstrative aspects, the triggered contention-based period may be configured, for example, to allow a STA, which obtains access to the wireless medium during the triggered contention-based period, to reserve the wireless medium, for example, for a reserved duration within the triggered contention-based period, e.g., as described below.

In some demonstrative aspects, the triggered contention-based period may be configured, for example, according to a random backoff mechanism, which may use a contention window between a first predefined contention window value and a second predefined contention window value, e.g., as described below.

In some demonstrative aspects, the first predefined contention window value may be 2, and/or the second predefined contention window value may be 7.

In other aspects, any other contention window, and/or any other backoff mechanism may be utilized for the triggered contention-based period.

In some demonstrative aspects, controller 154 may be configured to control, trigger, cause, and/or instruct a non-AP STA implemented by device 140 to process a trigger frame from an AP to identify an allocation of a triggered contention-based period to be allocated within a TxOP of the AP, e.g., as described below.

In some demonstrative aspects, controller 154 may be configured to control, trigger, cause, and/or instruct a non-AP STA implemented by device 140 to identify that the trigger frame is configured to indicate that only one or more eligible non-AP STAs, which are eligible to communicate during the triggered contention-based period, are to be allowed to contend a wireless medium during the triggered contention-based period, e.g., as described below.

In some demonstrative aspects, for example, the trigger frame received by the non-AP STA implemented by device 140 may include the trigger frame transmitted from the AP implemented by device 102, e.g., as described above.

In some demonstrative aspects, controller 154 may be configured to control, trigger, cause, and/or instruct a non-AP STA implemented by device 140 to allow the non-AP STA to contend the wireless medium for a transmission during the triggered contention-based period, for example, based on a determination that the non-AP STA is to be defined as an eligible non-AP STA for the triggered contention-based period, e.g., as described below.

In some demonstrative aspects, controller 154 may be configured to control, trigger, cause, and/or instruct a non-AP STA implemented by device 140 to process the trigger frame to identify duration information to indicate a duration of the triggered contention-based period, e.g., as described below.

In some demonstrative aspects, controller 154 may be configured to control, trigger, cause, and/or instruct a non-AP STA implemented by device 140 to contend the wireless medium during the triggered contention-based period, for example, according to an EDCA contention mechanism, e.g., as described below.

In other aspects, controller 154 may be configured to control, trigger, cause, and/or instruct a non-AP STA implemented by device 140 to contend the wireless medium during the triggered contention-based period according to any other suitable contention mechanism defined for the triggered contention-based period.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has a predefined type of traffic to be transmitted during the triggered contention-based period, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has latency-sensitive traffic to be transmitted during the triggered contention-based period, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has urgent traffic to be transmitted during the triggered contention-based period, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has high-priority traffic to be transmitted during the triggered contention-based period, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has traffic of a predefined AC to be transmitted during the triggered contention-based period, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA has a count of unsuccessful retransmissions greater than a retransmission threshold, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on whether the non-AP STA meets a predefined criterion, e.g., as described below.

In other aspects, controller 154 may be configured to control, trigger, cause, and/or instruct a non-AP STA implemented by device 140 to determine whether or not the non-AP STA is to be defined as the eligible non-AP STA for the triggered contention-based period according to any other additional or alternative suitable parameters and/or criteria.

In some demonstrative aspects, controller 154 may be configured to control, trigger, cause, and/or instruct a non-AP STA implemented by device 140 to initiate the triggered contention-based period a SIFS after the trigger frame, e.g., as described below.

In other aspects, the non-AP STA may be allowed to initiate the triggered contention-based period any other suitable time duration after the trigger frame.

In some demonstrative aspects, controller 154 may be configured to control, trigger, cause, and/or instruct a non-AP STA implemented by device 140 to process eligibility information from the AP, and to determine whether or not the non-AP STA is to be defined as the eligible non-AP STA for the triggered contention-based period, for example, based on the eligibility information, e.g., as described below.

In some demonstrative aspects, controller 154 may be configured to control, trigger, cause, and/or instruct a non-AP STA implemented by device 140 to process the eligibility information, for example, to identify eligibility condition information to indicate one or more eligibility conditions, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on the one or more eligibility conditions, e.g., as described below.

In some demonstrative aspects, controller 154 may be configured to control, trigger, cause, and/or instruct a non-AP STA implemented by device 140 to process the eligibility condition information, for example, to identify a latency-based condition, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on a determination whether a latency requirement of traffic to be communicated by the non-AP STA meets the latency-based condition, e.g., as described below.

In some demonstrative aspects, controller 154 may be configured to control, trigger, cause, and/or instruct a non-AP STA implemented by device 140 to process the eligibility condition information, for example, to identify a retransmission-based condition, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on a determination whether a count of unsuccessful retransmissions performed by the non-AP STA meets the retransmission-based condition, e.g., as described below.

In some demonstrative aspects, controller 154 may be configured to control, trigger, cause, and/or instruct a non-AP STA implemented by device 140 to process the eligibility information, for example, to identify that the non-AP STA is allowed to be defined as an eligible non-AP STA for the triggered contention-based period, for example, even when the non-AP STA is not associated with the AP, e.g., as described below.

In some demonstrative aspects, controller 154 may be configured to control, trigger, cause, and/or instruct a non-AP STA implemented by device 140 to process the eligibility information, for example, to identify STA identification information to identify the non-AP STA, e.g., as described below.

In some demonstrative aspects, controller 154 may be configured to control, trigger, cause, and/or instruct a non-AP STA implemented by device 140 to determine whether or not the non-AP STA is to be defined as the eligible non-AP STA for the triggered contention-based period, for example, based on a determination whether an identifier of the non-AP STA is indicated by the eligibility information.

In some demonstrative aspects, controller 154 may be configured to control, trigger, cause, and/or instruct a non-AP STA implemented by device 140 to identify at least part of the eligibility information in the trigger frame, e.g., as described below.

In some demonstrative aspects, controller 154 may be configured to control, trigger, cause, and/or instruct a non-AP STA implemented by device 140 to identify at least part of the eligibility information in a frame received from the AP prior to the trigger frame, e.g., as described below.

In some demonstrative aspects, controller 154 may be configured to control, trigger, cause, and/or instruct a non-AP STA implemented by device 140 to identify at least part of the eligibility information in a beacon frame received from the AP prior to the trigger frame, e.g., as described below.

In some demonstrative aspects, controller 154 may be configured to control, trigger, cause, and/or instruct a non-AP STA implemented by device 140 to process the eligibility information, for example, to identify a plurality of different eligibility modes, e.g., as described below.

In some demonstrative aspects, the plurality of eligibility modes may include at least a first eligibility mode and a second eligibility mode, e.g., as described below.

In some demonstrative aspects, the first eligibility mode may be configured, for example, to define first eligible non-AP STAs according to a first eligibility condition, e.g., as described below.

In some demonstrative aspects, the second eligibility mode may be configured, for example, to define second eligible non-AP STAs according to a second eligibility condition, e.g., different from the first eligibility condition.

In some demonstrative aspects, controller 154 may be configured to control, trigger, cause, and/or instruct a non-AP STA implemented by device 140 to process the beacon frame, for example, to identify timing information to indicate a transmission time of the trigger frame, e.g., as described below.

In some demonstrative aspects, controller 154 may be configured to control, trigger, cause, and/or instruct a non-AP STA implemented by device 140 to process the timing information, for example, to identify a periodicity of a plurality of transmissions of the trigger frame, e.g., as described below.

In some demonstrative aspects, controller 154 may be configured to control, trigger, cause, and/or instruct a non-AP STA implemented by device 140 to process contention-mechanism information from the AP, for example, to identify one or more parameters of a contention mechanism to be applied to the triggered contention-based period, e.g., as described below.

In some demonstrative aspects, the contention-mechanism information may include, for example, an EDCA parameter set for the triggered contention-based period, e.g., as described below.

In other aspects, the contention-mechanism information may include any other additional or alternative information to define one or more parameters for the triggered contention-based period.

In some demonstrative aspects, controller 154 may be configured to control, trigger, cause, and/or instruct a non-AP STA implemented by device 140 to identify at least part of the contention-mechanism information in the trigger frame, e.g., as described below.

In some demonstrative aspects, controller 154 may be configured to control, trigger, cause, and/or instruct a non-AP STA implemented by device 140 to identify at least part of the contention-mechanism information in a beacon frame received from the AP prior to the trigger frame, e.g., as described below.

In other aspects, controller 154 may be configured to control, trigger, cause, and/or instruct a non-AP STA implemented by device 140 to identify at least part of the contention-mechanism information in any other additional or alternative type of frame received from the AP prior to the trigger frame.

In some demonstrative aspects, controller 154 may be configured to control, trigger, cause, and/or instruct a non-AP STA implemented by device 140 to process mode information in the trigger frame, for example, to identify a mode of the triggered contention-based period, e.g., as described below.

In some demonstrative aspects, controller 154 may be configured to control, trigger, cause, and/or instruct a non-AP STA implemented by device 140 to determine a type of transmissions to be allowed during the triggered contention-based period, for example, based on the mode of the triggered contention-based period, e.g., as described below.

In some demonstrative aspects, controller 154 may be configured to control, trigger, cause, and/or instruct a non-AP STA implemented by device 140 to process the mode information, for example, to identify a predefined mode value from a plurality of predefined mode values, which may be configured, for example, to indicate a respective plurality of triggered contention-based period modes, e.g., as described below.

In some demonstrative aspects, the plurality of predefined mode values may include an UL mode value to indicate an UL triggered contention-based period, during which, for example, the eligible non-AP STAs may be allowed to transmit only UL PPDUs to the AP, e.g., as described below.

In some demonstrative aspects, the plurality of predefined mode values may include a mixed mode value to indicate a mixed triggered contention-based period, during which, for example, the eligible non-AP STAs may be allowed to transmit UL PPDUs to the AP, and/or peer-to-peer PPDUs from a first non-AP STA to a second non-AP STA, e.g., as described below.

In some demonstrative aspects, controller 154 may be configured to allow the non-AP STA implemented by device 140, for example, to reserve the wireless medium for a reserved duration within the triggered contention-based period, for example, based on a determination that the non-AP STA obtains access to the wireless medium during the triggered contention-based period, e.g., as described below.

In some demonstrative aspects, controller 154 may be configured to control, trigger, cause, and/or instruct a non-AP STA implemented by device 140 to contend the wireless medium during the triggered contention-based period, for example, according to a random backoff mechanism, for example, using a contention window between a first predefined contention window value and a second predefined contention window value, e.g., as described below.

In some demonstrative aspects, the first predefined contention window value may be 2, and/or the second predefined contention window value may be 7.

In other aspects, any other contention window, and/or any other backoff mechanism may be utilized for the triggered contention-based period.

In some demonstrative aspects, device 102, device 140, and/or device 160 may be configured to implement one or more operations and/or functionalities of an EDCA-triggered mechanism, e.g., as described below.

In some demonstrative aspects, the EDCA-triggered mechanism may be configured to define that an AP, e.g., the AP implemented by device 102, may send a trigger frame, which specifies that triggered-EDCA is enabled.

In some demonstrative aspects, the EDCA-triggered mechanism may be configured to define that the trigger frame may indicate a time duration of a time allocation, e.g., a triggered contention-based period, to be allocated by the trigger frame.

In some demonstrative aspects, the EDCA-triggered mechanism may be configured to define that the trigger frame may optionally indicate a list of STAs that are eligible STAs, and are allowed to contend during the time allocation.

In some demonstrative aspects, the EDCA-triggered mechanism may be configured to define that the trigger frame may optionally indicate one or more conditions, e.g., to assist or help STAs determine if they are eligible STAs or not, for example, based on the conditions defined in the trigger frame.

In some demonstrative aspects, STAs determine if they are eligible STAs or not for the triggered contention-based period, for example, one or more additional or alternative conditions and/or indications ("long term indications"), e.g., which may be provided through other means outside of this trigger frame.

In some demonstrative aspects, the EDCA-triggered mechanism may be configured to define that STAs that are not associated with the AP that sent the trigger may also, e.g., optionally, be allowed to be eligible STAs for the triggered contention-based period allocated by the trigger frame.

In some demonstrative aspects, the EDCA-triggered mechanism may be configured to define that following receipt of the trigger frame, STAs which are eligible STAs may be allowed to participate in the triggered contention-based period, for example, by contending the medium according to a contention mechanism (also referred to as "mini-contention").

In some demonstrative aspects, the EDCA-triggered mechanism may be configured to define that the mini-contention may start, for example, a SIFS time after the end of the trigger frame.

In some demonstrative aspects, the EDCA-triggered mechanism may be configured to define that the mini-contention may include a random backoff, for example, between fixed values, for example, a predefined minimal (min) contention window value, e.g., 2, and a predefined maximal (max) contention window, e.g., 7.

In some demonstrative aspects, the EDCA-triggered mechanism may be configured to define that the mini-contention may include an EDCA-based contention.

For example, the EDCA-triggered mechanism may be configured to define that the mini-contention may include a regular new EDCA, for example, with predefined parameters, e.g., a predefined EDCA parameter set, or configurable parameters, e.g., an EDCA parameter set configured by the AP transmitting the trigger frame.

In some demonstrative aspects, the EDCA-triggered mechanism may be configured to define that a STA may start transmitting one or more of its frames, for example, once the STA wins the mini-contention.

In some demonstrative aspects, the EDCA-triggered mechanism may be configured to define that the AP may configure a mode of triggered contention-based period to be initiated by the trigger frame, for example, to indicate a type of transmissions to be allowed during the triggered contention-based period.

In some demonstrative aspects, the EDCA-triggered mechanism may be configured to define that the AP may configure the mode of the trigger frame, for example, to indicate that the triggered contention-based period is to be allocated for only transmissions to the AP.

In some demonstrative aspects, the EDCA-triggered mechanism may be configured to define that the STAs may be allowed to transmit only frames, which are for the AP e.g., only UL PPDUs, for example, in case that the triggered contention-based period is allocated for only transmissions to the AP.

For example, the EDCA-triggered mechanism may be configured to define that the STA that wins the mini-contention and determines that the mode of the trigger frame is only for transmissions to the AP, may only transmit frames, e.g., UL frames, to the AP. For example, the AP may acknowledge a frame from the STA during the triggered contention-based period.

In some demonstrative aspects, the EDCA-triggered mechanism may be configured to define that the AP may configure the mode of the trigger frame, for example, to indicate that the triggered contention-based period is to be allocated for transmissions to the AP or transmissions to another peer, e.g., another non-AP STA.

In some demonstrative aspects, the EDCA-triggered mechanism may be configured to define that the STAs may be allowed to transmit frames, which are for the AP e.g., UL PPDUs, or frames to another peer, e.g., frames to another non-AP STA, for example, in case that the triggered contention-based period is allocated for transmissions to the AP or transmissions to another peer.

For example, the EDCA-triggered mechanism may be configured to define that the STA that wins the mini-contention and determines that the mode of the trigger frame is for transmissions to the AP or to another peer, may transmit frames, e.g., UL frames, to the AP, or frames to another peer. For example, the AP or the peer STA may acknowledge a frame from the STA during the triggered contention-based period.

In some demonstrative aspects, for example, the EDCA-triggered mechanism may be configured to define that operation following the contention period may follow a procedure similar to a TxOP sharing procedure, e.g., in accordance with an *IEEE 802.11be Specification.*

In some demonstrative aspects, the EDCA-triggered mechanism may be configured to define that STAs that win the mini contention may be able to reserve the medium for a reserved duration.

In some demonstrative aspects, the EDCA-triggered mechanism may be configured to define that STAs that win the mini contention may be able to reserve the medium for up to a certain maximal (max) duration.

In some demonstrative aspects, the EDCA-triggered mechanism may be configured to define that the max duration may be similar to a TxOP limit, e.g., but within the time allocation.

In some demonstrative aspects, the EDCA-triggered mechanism may be configured to define that the max duration may be configured as a per-STA time allocation limit.

In some demonstrative aspects, the EDCA-triggered mechanism may be configured to define one or more limits and/or conditions with respect to transmissions to be allowed during the time allocation allocated by the trigger frame.

For example, the EDCA-triggered mechanism may be configured to define a limit on the PPDU size, which a STA may be allowed to transmit during the time allocation.

For example, the EDCA-triggered mechanism may be configured to define a limit a number of transmissions a STA may be allowed to perform during the time allocation.

In one example, the EDCA-triggered mechanism may be configured to define that only one transmission may be allowed per STA.

In some demonstrative aspects, the EDCA-triggered mechanism may be configured to define that the allocated time may include more than one mini contention.

In some demonstrative aspects, the EDCA-triggered mechanism may be configured to define that one or more mini contentions may be performed, for example, after a transmission by the STA that won a first mini contention.

In some demonstrative aspects, the EDCA-triggered mechanism may be configured to define that a second mini-contention may be allowed during the triggered contention-based period, for example, after the end of a time used for one STA which won the first contention, e.g., if there is still unused time left in the triggered contention-based period.

In some demonstrative aspects, the EDCA-triggered mechanism may be configured to define that communication during the triggered contention-based period may be performed, for example, even without AP intervention, e.g., a hold from the AP. For example, the non-AP STAs may know the end of the per-STA allocation, and may be able to determine the second contention period, and to participate in, and possibly win, the contention, for example, to use a second per-STA time allocation.

In some demonstrative aspects, the EDCA-triggered mechanism may be configured to define that communication during the triggered contention-based period may be performed, for example, with the help of the AP. For example, after a per-STA time allocation, e.g., after every per-STA time allocation, the AP may re-take control of the medium and send another trigger frame for reinitiating another mini contention. In one example, the additional mini contention may be configured with the same parameters, e.g., as defined in the trigger frame. For example, the duration of the additional mini contention may be adjusted, e.g., according to the remaining time.

In some demonstrative aspects, the EDCA-triggered mechanism may be configured to define one or more rules ("long term rules") to be applied with respect to the triggered contention-based period.

In some demonstrative aspects, the EDCA-triggered mechanism may be configured to define the long term rules to include one or more preconfigured rules, which may be defined, for example, by a suitable Specification or Standard.

In some demonstrative aspects, the EDCA-triggered mechanism may be configured to define one or more rules, e.g., long term rules, to define which STA and/or when a STA may become an eligible STA for the EDCA-triggered mechanism.

In some demonstrative aspects, the EDCA-triggered mechanism may be configured to define that a STA using a particular, e.g., one, access category and that experienced a certain amount of collisions and retransmissions, e.g., with a regular EDCA and that access category, may be allowed to become an eligible STA.

In some demonstrative aspects, the EDCA-triggered mechanism may be configured to define a first number of retransmissions to define eligible STAs for a first AC, and a second number of retransmissions, e.g., different from the first number of retransmissions, to define eligible STAs for a second AC.

For example, the EDCA-triggered mechanism may be configured to define for a Best Effort AC (AC_BE), that a STA may be an eligible STA, for example, when 3 retransmissions occur.

For example, the EDCA-triggered mechanism may be configured to define for a Voice AC (AC_VO), that a STA may be an eligible STA, for example, when 1 retransmission occurs.

In some demonstrative aspects, the EDCA-triggered mechanism may be configured to define that a STA defined as an eligible STA, e.g., based on the number of unsuccessful retransmissions of a frame, may return to a status of a non-eligible STA, for example, based on a successful transmission of the frame from the STA.

For example, once the frame is transmitted from the STA, e.g., through regular EDCA or using the triggered-EDCA mode, the regular EDCA may restart as normal, and the STA may re-becomes not eligible.

In some demonstrative aspects, the EDCA-triggered mechanism may be configured to define that a STA may be allowed to negotiate with the AP whether the STA is to be defined as an eligible STA.

In some demonstrative aspects, the EDCA-triggered mechanism may be configured to define that some STAs that have a particular type of traffic, e.g., urgent traffic, may be allowed to negotiate with the AP, for example, such that for some of their traffic, the STAs may be allowed, e.g., may always be allowed, to be eligible STAs.

In some demonstrative aspects, the EDCA-triggered mechanism may be configured to define that an AP may be allowed to advertise in one or more frames, for example, in beacon frames, a time at which the AP is intended to send trigger frames for the triggered-EDCA.

In some demonstrative aspects, the EDCA-triggered mechanism may be configured to define that an AP may be allowed to advertise in one or more frames, for example, in beacon frames, at which periodicity the AP is intended to send trigger frames for the triggered-EDCA.

In some demonstrative aspects, the EDCA-triggered mechanism may be configured to define that an AP may utilize a plurality of different triggered-EDCA modes, for example, having different configurations and/or conditions.

In some demonstrative aspects, the EDCA-triggered mechanism may be configured to define that an AP may announce a plurality of different triggered-EDCA modes, for example, with different conditions.

For example, a first triggered-EDCA mode may be announced for a particular type of traffic, e.g., urgent traffic.

For example, a second triggered-EDCA mode may be announced for a particular number of retransmissions, e.g., regular traffic with a number of retransmissions exceeding a retransmission threshold.

For example, a third triggered-EDCA mode may be announced for a combination between a particular type of traffic and a particular number of retransmissions, e.g., urgent traffic with a number of retransmissions exceeding a retransmission threshold for urgent traffic.

In other aspects, any other triggered-EDCA mode may be defined based on any other additional or alternative configuration and/or conditions.

In some demonstrative aspects, the EDCA-triggered mechanism may be configured to define that an AP may announce a plurality of different triggered-EDCA modes, for example, separately, e.g., in the same beacon.

In some demonstrative aspects, the EDCA-triggered mechanism may be configured to define that an AP may utilize one or more broadcast Target-Wake-Time (TWT) announcements to announce the triggered-EDCA modes.

In some demonstrative aspects, the EDCA-triggered mechanism may be configured to define that an AP may utilize any other, e.g., new, type or format of advertisement and/or announcement, to announce the triggered-EDCA modes.

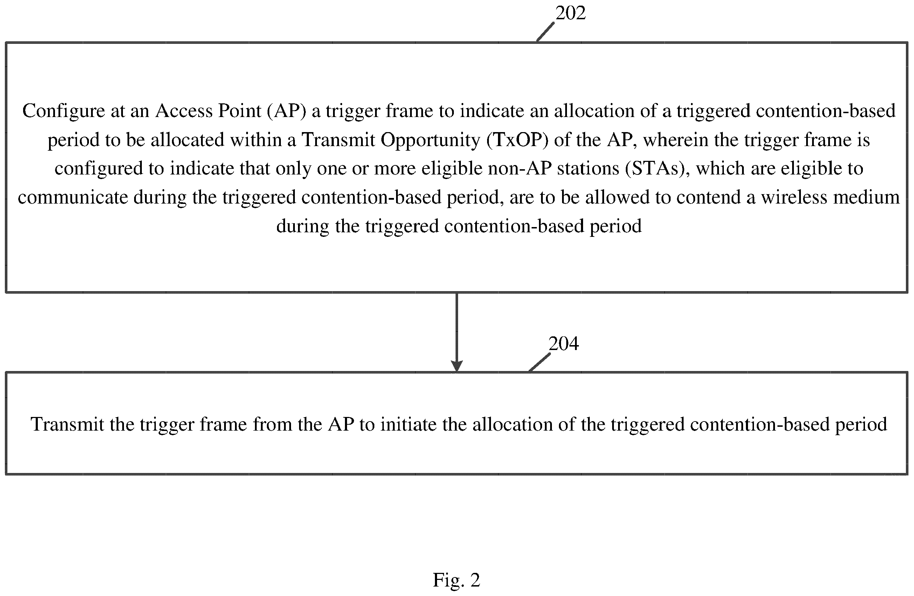

Reference is made to Fig. 2, which schematically illustrates a method of a triggered contention-based period, in accordance with some demonstrative aspects. For example, one or more of the operations of the method of Fig. 2 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 202, the method may include configuring at an AP a trigger frame to indicate an allocation of a triggered contention-based period to be allocated within a TxOP of the AP. For example, the trigger frame may be configured to indicate that only one or more eligible non-AP STAs, which are eligible to communicate during the triggered contention-based period, are to be allowed to contend a wireless medium during the triggered contention-based period. For example, controller 124 (Fig. 1) may be configured to cause, trigger, and/or control an AP implemented by device 102 (Fig. 1) to configure the trigger frame, e.g., as described above.

As indicated at block 204, the method may include transmitting the trigger frame to initiate the allocation of the triggered contention-based period. For example, controller 124 (Fig. 1) may be configured to cause, trigger, and/or control the AP implemented by device 102 (Fig. 1) to transmit the trigger frame to initiate the allocation of the triggered contention-based period, e.g., as described above.

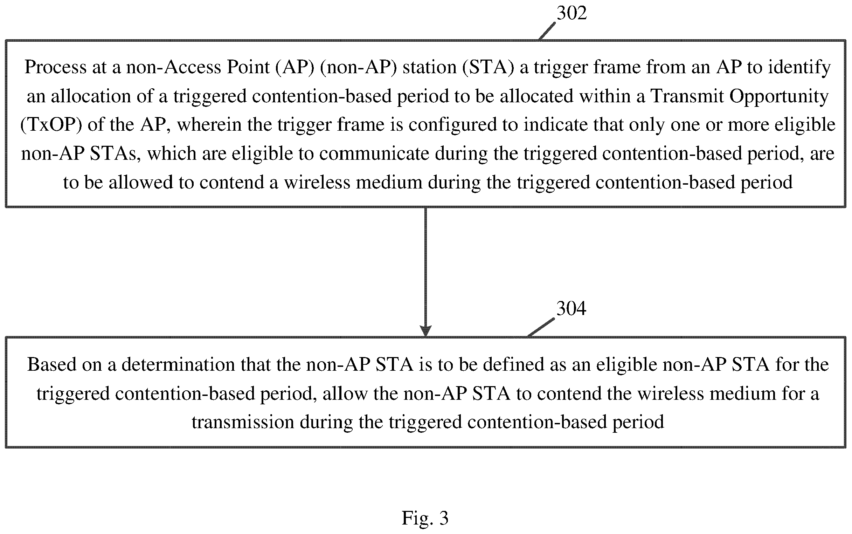

Reference is made to Fig. 3, which schematically illustrates a method of a triggered contention-based period, in accordance with some demonstrative aspects. For example, one or more of the operations of the method of Fig. 3 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 302, the method may include processing at a non-AP STA a trigger frame from an AP, for example, to identify an allocation of a triggered contention-based period to be allocated within a TxOP of the AP. For example, wherein the trigger frame may be configured to indicate that only one or more eligible non-AP STAs, which are eligible to communicate during the triggered contention-based period, are to be allowed to contend a wireless medium during the triggered contention-based period. For example, controller 154 (Fig. 1) may be configured to cause, trigger, and/or control a non-AP STA implemented by device 140 (Fig. 1) to process the trigger frame to identify the allocation of the triggered contention-based period, e.g., as described above.

As indicated at block 304, the method may include allowing the non-AP STA to contend the wireless medium for a transmission during the triggered contention-based period, for example, based on a determination that the non-AP STA is to be defined as an eligible non-AP STA for the triggered contention-based period. For example, controller 154 (Fig. 1) may be configured to allow the non-AP STA implemented by device 140 (Fig. 1) to contend the wireless medium for a transmission during the triggered contention-based period, for example, based on a determination that the non-AP STA is to be defined as an eligible non-AP STA for the triggered contention-based period, e.g., as described above.

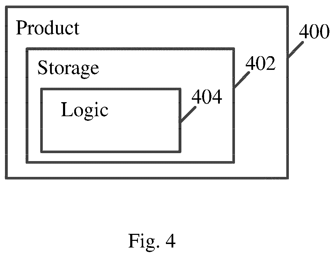

Reference is made to Fig. 4, which schematically illustrates a product of manufacture 400, in accordance with some demonstrative aspects. Product 400 may include one or more tangible computer-readable ("machine-readable") non-transitory storage media 402, which may include computer-executable instructions, e.g., implemented by logic 404, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, and/or 3, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 400 and/or machine readable storage media 402 may include one or more types of computer-readable storage media capable of storing data, including volatile memory, non-volatile memory, removable or non-removable memory, erasable or non-erasable memory, writeable or re-writeable memory, and the like. For example, machine readable storage media 402 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 404 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 404 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to configure a trigger frame to indicate an allocation of a triggered contention-based period to be allocated within a Transmit Opportunity (TxOP) of the AP, wherein the trigger frame is configured to indicate that only one or more eligible non-AP stations (STAs), which are eligible to communicate during the triggered contention-based period, are to be allowed to contend a wireless medium during the triggered contention-based period; and transmit the trigger frame to initiate the allocation of the triggered contention-based period.

Example 2 includes the subject matter of Example 1, and optionally, wherein the apparatus is configured to cause the AP to transmit eligibility information to indicate a definition of the one or more eligible non-AP STAs for the triggered contention-based period.

Example 3 includes the subject matter of Example 2, and optionally, wherein the eligibility information comprises eligibility condition information to indicate one or more eligibility conditions to determine whether a non-AP STA is to be defined as an eligible non-AP STA for the triggered contention-based period.

Example 4 includes the subject matter of Example 3, and optionally, wherein the one or more eligibility conditions comprise a latency-based condition to determine whether the non-AP STA is to be defined as the eligible non-AP STA for the triggered contention-based period based on a latency requirement of traffic to be communicated by the non-AP STA.

Example 5 includes the subject matter of Example 3 or 4, and optionally, wherein the one or more eligibility conditions comprise a retransmission-based condition to determine whether the non-AP STA is to be defined as the eligible non-AP STA for the triggered contention-based period based on a count of unsuccessful retransmissions performed by the non-AP STA.

Example 6 includes the subject matter of any one of Examples 2-5, and optionally, wherein the eligibility information is configured to allow a non-associated STA, which is not associated with the AP, to be defined as an eligible non-AP STA for the triggered contention-based period.

Example 7 includes the subject matter of any one of Examples 2-6, and optionally, wherein the eligibility information comprises STA-identification information configured to identify the one or more eligible non-AP STAs.

Example 8 includes the subject matter of any one of Examples 2-7, and optionally, wherein the apparatus is configured to cause the AP to configure the trigger frame to include at least part of the eligibility information.

Example 9 includes the subject matter of any one of Examples 2-8, and optionally, wherein the apparatus is configured to cause the AP to transmit at least part of the eligibility information in a beacon frame prior to the trigger frame.

Example 10 includes the subject matter of Example 9, and optionally, wherein the eligibility information is configured to define a plurality of different eligibility modes comprising at least a first eligibility mode and a second eligibility mode, the first eligibility mode to define first eligible non-AP STAs according to a first eligibility condition, the second eligibility mode to define second eligible non-AP STAs according to a second eligibility condition, different from the first eligibility condition.

Example 11 includes the subject matter of Example 9 or 10, and optionally, wherein the beacon frame comprises timing information to indicate a transmission time of the trigger frame.

Example 12 includes the subject matter of Example 11, and optionally, wherein the timing information is configured to indicate a periodicity of a plurality of transmissions of the trigger frame.

Example 13 includes the subject matter of any one of Examples 1-12, and optionally, wherein the apparatus is configured to cause the AP to transmit contention-mechanism information to define one or more parameters of a contention mechanism to be applied to the triggered contention-based period.

Example 14 includes the subject matter of Example 13, and optionally, wherein the contention-mechanism information comprises an Enhanced Distributed Channel Access (EDCA) parameter set for the triggered contention-based period.

Example 15 includes the subject matter of Example 13 or 14, and optionally, wherein the apparatus is configured to cause the AP to configure the trigger frame to include at least part of the contention-mechanism information.

Example 16 includes the subject matter of any one of Examples 13-15, and optionally, wherein the apparatus is configured to cause the AP to transmit at least part of the contention-mechanism information in a beacon frame prior to the trigger frame.

Example 17 includes the subject matter of any one of Examples 1-16, and optionally, wherein the apparatus is configured to cause the AP to set mode information in the trigger frame to indicate a mode of the triggered contention-based period, wherein the mode of the triggered contention-based period is to define a type of transmissions to be allowed during the triggered contention-based period.

Example 18 includes the subject matter of Example 17, and optionally, wherein the apparatus is configured to cause the AP to set the mode information to a predefined mode value from a plurality of predefined mode values, the plurality of predefined mode values to indicate a respective plurality of triggered contention-based period modes.

Example 19 includes the subject matter of Example 18, and optionally, wherein the plurality of predefined mode values comprises an Uplink (UL) mode value to indicate an UL triggered contention-based period, during which the eligible non-AP STAs are allowed to transmit only UL Physical layer (PHY) Protocol Data Units (PPDUs) to the AP.

Example 20 includes the subject matter of Example 18 or 19, and optionally, wherein the plurality of predefined mode values comprises a mixed mode value to indicate a mixed triggered contention-based period, during which the eligible non-AP STAs are allowed to transmit Uplink (UL) Physical layer (PHY) Protocol Data Units (PPDUs) to the AP, and peer-to-peer PPDUs from a non-AP STA to a peer STA.

Example 21 includes the subject matter of any one of Examples 1-20, and optionally, wherein the triggered contention-based period is configured to allow a STA, which obtains access to the wireless medium during the triggered contention-based period, to reserve the wireless medium for a reserved duration within the triggered contention-based period.

Example 22 includes the subject matter of any one of Examples 1-21, and optionally, wherein the triggered contention-based period is configured according to a random backoff mechanism using a contention window between a first predefined contention window value and a second predefined contention window value.

Example 23 includes the subject matter of Example 22, and optionally, wherein the first predefined contention window value is 2 and the second predefined contention window value is 7.

Example 24 includes the subject matter of any one of Examples 1-23, and optionally, wherein the trigger frame comprises duration information to indicate a duration of the triggered contention-based period.

Example 25 includes the subject matter of any one of Examples 1-24, and optionally, wherein the triggered contention-based period is configured according to an Enhanced Distributed Channel Access (EDCA) contention mechanism.

Example 26 includes the subject matter of any one of Examples 1-25, and optionally, wherein the one or more eligible non-AP STAs comprises a non-AP STA having latency-sensitive traffic to be transmitted during the triggered contention-based period.

Example 27 includes the subject matter of any one of Examples 1-26, and optionally, wherein the one or more eligible non-AP STAs comprises a non-AP STA having a count of unsuccessful retransmissions greater than a retransmission threshold.

Example 28 includes the subject matter of any one of Examples 1-27, and optionally, wherein the trigger frame is configured to initiate the triggered contention-based period a Short Inter-Frame Space (SIFS) after the trigger frame.

Example 29 includes the subject matter of any one of Examples 1-28, and optionally, comprising at least one radio to transmit the trigger frame from the AP.

Example 30 includes the subject matter of Example 29, and optionally, comprising one or more antennas connected to the radio, and a processor to execute instructions of an operating system.

Example 31 includes an apparatus comprising logic and circuitry configured to cause a non-Access Point (AP) (non-AP) station (STA) to process a trigger frame from an AP to identify an allocation of a triggered contention-based period to be allocated within a Transmit Opportunity (TxOP) of the AP, wherein the trigger frame is configured to indicate that only one or more eligible non-AP STAs, which are eligible to communicate during the triggered contention-based period, are to be allowed to contend a wireless medium during the triggered contention-based period; and based on a determination that the non-AP STA is to be defined as an eligible non-AP STA for the triggered contention-based period, allow the non-AP STA to contend the wireless medium for a transmission during the triggered contention-based period.

Example 32 includes the subject matter of Example 31, and optionally, wherein the apparatus is configured to cause the non-AP STA to process eligibility information from the AP, and to determine whether the non-AP STA is to be defined as the eligible non-AP STA for the triggered contention-based period based on the eligibility information.

Example 33 includes the subject matter of Example 32, and optionally, wherein the apparatus is configured to cause the non-AP STA to process the eligibility information to identify eligibility condition information to indicate one or more eligibility conditions, and to determine whether the non-AP STA is to be defined as the eligible non-AP STA for the triggered contention-based period based on the one or more eligibility conditions.

Example 34 includes the subject matter of Example 33, and optionally, wherein the apparatus is configured to cause the non-AP STA to process the eligibility condition information to identify a latency-based condition, and to determine whether the non-AP STA is to be defined as the eligible non-AP STA for the triggered contention-based period based on a determination whether a latency requirement of traffic to be communicated by the non-AP STA meets the latency-based condition.

Example 35 includes the subject matter of Example 33 or 34, and optionally, wherein the apparatus is configured to cause the non-AP STA to process the eligibility condition information to identify a retransmission-based condition, and determine whether the non-AP STA is to be defined as the eligible non-AP STA for the triggered contention-based period based on a determination whether a count of unsuccessful retransmissions performed by the non-AP STA meets the retransmission-based condition.

Example 36 includes the subject matter of any one of Examples 32-35, and optionally, wherein the apparatus is configured to cause the non-AP STA to process the eligibility information to identify that the non-AP STA is allowed to be defined as an eligible non-AP STA for the triggered contention-based period when the non-AP STA is not associated with the AP.

Example 37 includes the subject matter of any one of Examples 32-36, and optionally, wherein the apparatus is configured to cause the non-AP STA to process the eligibility information to identify STA identification information to identify the non-AP STA.

Example 38 includes the subject matter of any one of Examples 32-27, and optionally, wherein the apparatus is configured to cause the non-AP STA to identify at least part of the eligibility information in the trigger frame.

Example 39 includes the subject matter of any one of Examples 32-38, and optionally, wherein the apparatus is configured to cause the non-AP STA to identify at least part of the eligibility information in a beacon frame received from the AP prior to the trigger frame.

Example 40 includes the subject matter of Example 39, and optionally, wherein the apparatus is configured to cause the non-AP STA to process the eligibility information to identify a plurality of different eligibility modes comprising at least a first eligibility mode and a second eligibility mode, the first eligibility mode to define first eligible non-AP STAs according to a first eligibility condition, the second eligibility mode to define second eligible non-AP STAs according to a second eligibility condition, different from the first eligibility condition.

Example 41 includes the subject matter of Example 39 or 40, and optionally, wherein the apparatus is configured to cause the non-AP STA to process the beacon frame to identify timing information to indicate a transmission time of the trigger frame.

Example 42 includes the subject matter of Example 41, and optionally, wherein the apparatus is configured to cause the non-AP STA to process the timing information to identify a periodicity of a plurality of transmissions of the trigger frame.

Example 43 includes the subject matter of any one of Examples 31-42, and optionally, wherein the apparatus is configured to cause the non-AP STA to process contention-mechanism information from the AP to identify one or more parameters of a contention mechanism to be applied to the triggered contention-based period.

Example 44 includes the subject matter of Example 43, and optionally, wherein the contention-mechanism information comprises an Enhanced Distributed Channel Access (EDCA) parameter set for the triggered contention-based period.

Example 45 includes the subject matter of Example 43 or 44, and optionally, wherein the apparatus is configured to cause the non-AP STA to identify at least part of the contention-mechanism information in the trigger frame.

Example 46 includes the subject matter of any one of Examples 43-45, and optionally, wherein the apparatus is configured to cause the non-AP STA to identify at least part of the contention-mechanism information in a beacon frame received from the AP prior to the trigger frame.

Example 47 includes the subject matter of any one of Examples 31-46, and optionally, wherein the apparatus is configured to cause the non-AP STA to process mode information in the trigger frame to identify a mode of the triggered contention-based period, and, based on the mode of the triggered contention-based period, to determine a type of transmissions to be allowed during the triggered contention-based period.

Example 48 includes the subject matter of Example 47, and optionally, wherein the apparatus is configured to cause the non-AP STA to process the mode information to identify a predefined mode value from a plurality of predefined mode values, the plurality of predefined mode values to indicate a respective plurality of triggered contention-based period modes.

Example 49 includes the subject matter of Example 48, and optionally, wherein the plurality of predefined mode values comprises an Uplink (UL) mode value to indicate an UL triggered contention-based period, during which the eligible non-AP STAs are allowed to transmit only UL Physical layer (PHY) Protocol Data Units (PPDUs) to the AP.

Example 50 includes the subject matter of Example 48 or 49, and optionally, wherein the plurality of predefined mode values comprises a mixed mode value to indicate a mixed triggered contention-based period, during which the eligible non-AP STAs are allowed to transmit UL Physical layer (PHY) Protocol Data Units (PPDUs) to the AP, and peer-to-peer PPDUs from a first non-AP STA to a second non-AP STA.

Example 51 includes the subject matter of any one of Examples 31-50, and optionally, wherein the apparatus is configured to allow the non-AP STA to, based on a determination that the non-AP STA obtains access to the wireless medium during the triggered contention-based period, reserve the wireless medium for a reserved duration within the triggered contention-based period.

Example 52 includes the subject matter of any one of Examples 31-51, and optionally, wherein the apparatus is configured to cause the non-AP STA to contend the wireless medium during the triggered contention-based period according to a random backoff mechanism using a contention window between a first predefined contention window value and a second predefined contention window value.

Example 53 includes the subject matter of Example 52, and optionally, wherein the first predefined contention window value is 2 and the second predefined contention window value is 7.

Example 54 includes the subject matter of any one of Examples 31-53, and optionally, wherein the apparatus is configured to cause the non-AP STA to process the trigger frame to identify duration information to indicate a duration of the triggered contention-based period.

Example 55 includes the subject matter of any one of Examples 31-54, and optionally, wherein the apparatus is configured to cause the non-AP STA to contend the wireless medium during the triggered contention-based period according to an Enhanced Distributed Channel Access (EDCA) contention mechanism.

Example 56 includes the subject matter of any one of Examples 31-55, and optionally, wherein the apparatus is configured to cause the non-AP STA to determine whether the non-AP STA is to be defined as the eligible non-AP STA for the triggered contention-based period based on whether the non-AP STA has latency-sensitive traffic to be transmitted during the triggered contention-based period.

Example 57 includes the subject matter of any one of Examples 31-56, and optionally, wherein the apparatus is configured to cause the non-AP STA to determine whether the non-AP STA is to be defined as the eligible non-AP STA for the triggered contention-based period based on whether the non-AP STA has a count of unsuccessful retransmissions greater than a retransmission threshold.

Example 58 includes the subject matter of any one of Examples 31-57, and optionally, wherein the apparatus is configured to cause the non-AP STA to initiate the triggered contention-based period a Short Inter-Frame Space (SIFS) after the trigger frame.

Example 59 includes the subject matter of any one of Examples 51-58, and optionally, comprising at least one radio to receive the trigger frame and to transmit one or more transmissions from the non-AP STA over the wireless medium.

Example 60 includes the subject matter of Example 59, and optionally, comprising one or more antennas connected to the radio, and a processor to execute instructions of an operating system.

Example 61 comprises a wireless communication device comprising the apparatus of any of Examples 1-60.

Example 62 comprises a mobile device comprising the apparatus of any of Examples 1-60.

Example 63 comprises an apparatus comprising means for executing any of the described operations of any of Examples 1-60.

Example 64 comprises a product comprising one or more tangible computer-readable non-transitory storage media comprising instructions operable to, when executed by at least one processor, enable the at least one processor to cause a wireless communication device to perform any of the described operations of any of Examples 1-60.

Example 65 comprises an apparatus comprising: a memory interface; and processing circuitry configured to: perform any of the described operations of any of Examples 1-60.

Example 66 comprises a method comprising any of the described operations of any of Examples 1-60.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at an Access Point (AP), the method comprising:
configuring a trigger frame to indicate an allocation of a triggered contention-based period to be allocated within a Transmit Opportunity (TxOP) of the AP, wherein the trigger frame is configured to indicate that only one or more eligible non-AP stations (STAs), which are eligible to communicate during the triggered contention-based period, are to be allowed to contend a wireless medium during the triggered contention-based period; and
transmitting the trigger frame to initiate the allocation of the triggered contention-based period.

2. The method of claim 1 comprising transmitting eligibility information to indicate a definition of the one or more eligible non-AP STAs for the triggered contention-based period.

3. The method of claim 2, wherein the eligibility information comprises eligibility condition information to indicate one or more eligibility conditions to determine whether a non-AP STA is to be defined as an eligible non-AP STA for the triggered contention-based period.

4. The method of claim 3, wherein the one or more eligibility conditions comprise a latency-based condition to determine whether the non-AP STA is to be defined as the eligible non-AP STA for the triggered contention-based period based on a latency requirement of traffic to be communicated by the non-AP STA, and/or a retransmission-based condition to determine whether the non-AP STA is to be defined as the eligible non-AP STA for the triggered contention-based period based on a count of unsuccessful retransmissions performed by the non-AP STA.

5. The method of any one of claims 2-4, wherein the eligibility information is configured to allow a non-associated STA, which is not associated with the AP, to be defined as an eligible non-AP STA for the triggered contention-based period.

6. The method of any one of claims 2-5, wherein the eligibility information comprises STA-identification information configured to identify the one or more eligible non-AP STAs.

7. The method of any one of claims 2-6 comprising transmitting at least part of the eligibility information in a beacon frame prior to the trigger frame.

8. The method of claim 7, wherein the eligibility information is configured to define a plurality of different eligibility modes comprising at least a first eligibility mode and a second eligibility mode, the first eligibility mode to define first eligible non-AP STAs according to a first eligibility condition, the second eligibility mode to define second eligible non-AP STAs according to a second eligibility condition, different from the first eligibility condition.

9. The method of any one of claims 1-8 comprising setting mode information in the trigger frame to indicate a mode of the triggered contention-based period, wherein the mode of the triggered contention-based period is to define a type of transmissions to be allowed during the triggered contention-based period.

10. The method of claim 9 comprising setting the mode information to a predefined mode value from a plurality of predefined mode values, the plurality of predefined mode values to indicate a respective plurality of triggered contention-based period modes.

11. The method of claim 10, wherein the plurality of predefined mode values comprises an Uplink (UL) mode value to indicate an UL triggered contention-based period, during which the eligible non-AP STAs are allowed to transmit only UL Physical layer (PHY) Protocol Data Units (PPDUs) to the AP, and/or a mixed mode value to indicate a mixed triggered contention-based period, during which the eligible non-AP STAs are allowed to transmit Uplink (UL) Physical layer (PHY) Protocol Data Units (PPDUs) to the AP, and peer-to-peer PPDUs from a non-AP STA to a peer STA.

12. The method of any one of claims 1-11, wherein the one or more eligible non-AP STAs comprises a non-AP STA having latency-sensitive traffic to be transmitted during the triggered contention-based period, and/or a non-AP STA having a count of unsuccessful retransmissions greater than a retransmission threshold.

13. An apparatus comprising means for causing an Access Point (AP) to perform the method of any one of claims 1-12.

14. The apparatus of claim 13 comprising at least one radio to transmit the trigger frame from the AP, one or more antennas connected to the radio, and a processor to execute instructions of an operating system.

15. A product comprising one or more tangible computer-readable non-transitory storage media comprising instructions operable to, when executed by at least one processor, enable the at least one processor to cause an Access Point (AP) to perform the method of any one of claims 1-12.
